(19) Europäisches Patentamt
European Patent Office
Office européen des brevets

(11) **EP 2 577 026 B1**

(12) **EUROPÄISCHE PATENTSCHRIFT**

(45) Veröffentlichungstag und Bekanntmachung des Hinweises auf die Patenterteilung:
**08.07.2020 Patentblatt 2020/28**

(21) Anmeldenummer: **11719248.4**

(22) Anmeldetag: **10.05.2011**

(51) Int Cl.:
*F02D 11/10* *(2006.01)*    *F02D 35/00* *(2006.01)*
*F02D 41/24* *(2006.01)*    *F02D 41/00* *(2006.01)*

(86) Internationale Anmeldenummer:
**PCT/EP2011/057465**

(87) Internationale Veröffentlichungsnummer:
**WO 2011/147672 (01.12.2011 Gazette 2011/48)**

(54) **Verfahren und Computerprogrammprodukt zum Kalibrieren eines Stellgebersystems**

Method and computer program product for calibrating an actuator sytem

Procédé et produit programme d'ordinateur pour la calibration d'un système d'actionneur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2010 DE 102010029271**
**17.12.2010 DE 102010063326**

(43) Veröffentlichungstag der Anmeldung:
**10.04.2013 Patentblatt 2013/15**

(73) Patentinhaber: Robert Bosch GmbH
**70442 Stuttgart (DE)**

(72) Erfinder:
• **GROSSMANN, Alex**
**71229 Leonberg (DE)**
• **TOSUN, Zeynep**
**70176 Stuttgart (DE)**
• **SIEBER, Udo**
**74321 Bietigheim (DE)**
• **BUEHRLE, Ralf**
**71686 Hochberg (DE)**

(56) Entgegenhaltungen:
EP-A2- 1 338 775    DE-A1- 10 065 488
DE-A1- 19 829 808    DE-A1-102008 031 620

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Technisches Gebiet

Die Erfindung betrifft bürstenlose Elektromotoren zum Einsatz in Stellgebern, bei denen eine Position eines zu stellenden Stellglieds durch einen Positionssensor zurückgelesen werden kann.

Stand der Technik

In einem Kraftfahrzeug werden zahlreiche Stellgeber verwendet. Die Stellgeber umfassen üblicherweise einen elektromotorischen Antrieb, ein Getriebe und ein Stellglied, dessen Position durch den Elektromotor und über das Getriebe eingestellt werden kann. Beispielsweise werden derartige Stellgeber als Drosselklappensteller, als Abgasrückführungsventil, für Ladungsbewegungsklappen und zahlreiche vergleichbare Komponenten eingesetzt.

Je nach Einsatzgebiet sind derartige Stellgeber häufig mit einem Positionssensor zum Rücklesen der tatsächlichen Istposition des Stellglieds versehen. Ein solcher Positionssensor kann zum einen zum Überprüfen der korrekten Position des Stellglieds verwendet werden. Dadurch kann überwacht werden, dass die angesteuerte Position des Stellgebers auch der tatsächlichen Stellposition des Stellglieds entspricht. Andererseits kann mithilfe der durch den Positionssensor erfassten Istposition eine Positionsregelung des Stellglieds durchgeführt werden, indem die gemessene Istposition im Vergleich zu einer vorgegebenen Sollposition geregelt wird.

Üblicherweise werden für derartige Stellgeber bürstenkommutierte Elektromotoren verwendet. Diese haben jedoch den Nachteil, dass sie durch die Entstehung von Bürstenfeuer ein verschlechtertes EMV-Verhalten aufweisen. Weiterhin weisen sie z. B. aufgrund von Reibung der Bürsten auf dem Kommutator einen höheren Energieverbrauch auf und haben aufgrund des Verschleißes der Bürsten eine verringerte Lebensdauer.

Diese Nachteile treffen nicht auf elektronisch kommutierte (bürstenlose) Elektromotoren zu. Diese erfordern jedoch eine externe Kommutierung, wozu eine Kenntnis der Rotorlage erforderlich ist. Die üblichen Verfahren zur Erfassung der Rotorlage verwenden zusätzliche Rotorlagesensoren im Elektromotor, die den Stellgeber insgesamt verteuern und zudem den Verkabelungsaufwand zwischen dem Stellgeber und einem entsprechenden Steuergerät erhöhen. Auch sensorlose Verfahren, die z. B. auf einer Messung der in der Statorwicklung induzierten Spannung basieren, erfordern eine aufwändige Beschaltung im Steuergerät und sind für Anwendungen bei einem Stellgeber in der Regel zu aufwändig.

Alternative Verfahren, bei denen die Rotorlage über eine Messung der rotorlageabhängigen Induktivität der Statorspulen bestimmt wird, benötigen ebenfalls eine aufwändige Beschaltung im Steuergerät und sind zudem nicht so robust und zuverlässig wie die sensorgebundenen Verfahren zur Messung der Rotorlage.

Es ist daher Aufgabe der vorliegenden Erfindung, einen Stellgeber mit einem elektronisch kommutierten Elektromotor vorzusehen, der in einfacher Weise realisiert werden kann und obige Nachteile nicht aufweist.

Aus der EP 1 338 775 A2 ist eine Motoransteuerung für einen elektrisch kommutierten Motor (EC-Motor) bekannt.

Aus der DE 198 29 808 A1 sind ein Verfahren und eine Einrichtung zum Steuern der Luftansaugmenge für eine Maschine bekannt.

Aus der DE 100 65 488 A1 ist eine Luftansaugmengensteuereinrichtung für Brennkraftmaschinen bekannt.

Offenbarung der Erfindung

Diese Aufgabe wird durch das Verfahren zum Kalibrieren eines Stellgebersystems nach Anspruch 1 sowie durch das Computerprogrammprodukt gemäß Anspruch 3 gelöst.

Kurzbeschreibung der Zeichnungen

Bevorzugte Ausführungsformen der vorliegenden Erfindung werden nachfolgend anhand der beigefügten Zeichnungen näher erläutert. Es zeigen:

Figur 1    eine schematische Darstellung eines Stellgebersystems, bei dem ein externer Positionssensor für eine Kommutierung des Stellantriebs verwendet wird;

Figur 2    ein Diagramm zur Veranschaulichung des Drehmoments abhängig von einer Winkeldifferenz zwischen dem Motormagnetfeld und dem von dem Läufer erzeugten Erregermagnetfeld bei konstantem Motorstrom;

Figur 3    ein Diagramm zur Veranschaulichung des Verlaufs der Positionsangabe über der Läuferlage bei einem nichtlinearen Getriebe; und

Figur 4    ein Diagramm zur Veranschaulichung der Abhängigkeit der an dem Läufer wirkenden Gegenkraft von der Läuferlage des Läufers.

Beschreibung von Ausführungsformen

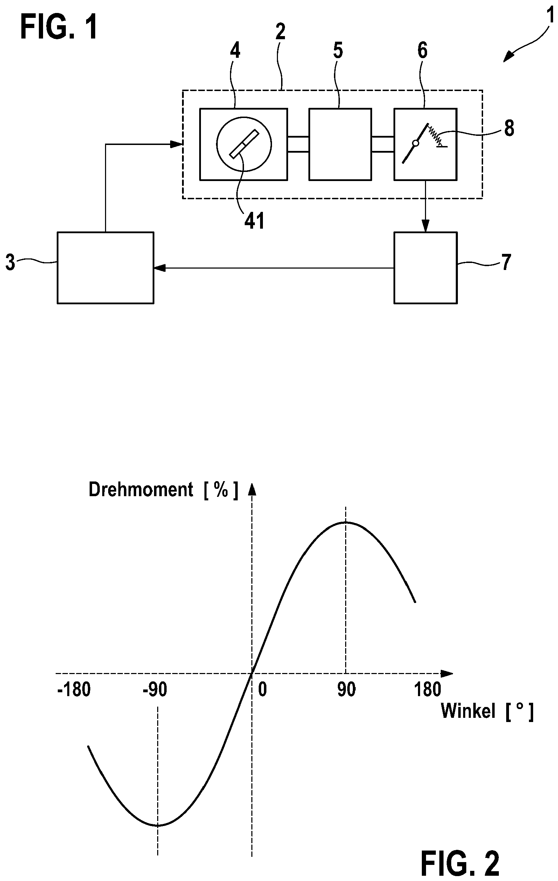

Figur 1 zeigt ein Stellgebersystem 1 mit einem Stellgeber 2, der von einem Steuergerät 3 angesteuert wird.

Der Stellgeber 2 umfasst einen elektromotorischen Antrieb 4, der einen elektronisch kommutierten, d. h. bürstenlosen Elektromotor, wie z. B. einen Synchronmotor, einen Asynchronmotor oder dergleichen, aufweist. Der Antrieb 4 weist eine Abtriebswelle auf, die mit einem Getriebe 5 gekoppelt ist. Das Getriebe 5 ist weiterhin mit einem Stellglied 6 gekoppelt. Das Stellglied 6 soll, angesteuert durch das Steuergerät 3, in vorgegebene Positionen bzw. Stellungen verfahren bzw. verstellt werden.

An dem Stellglied 6 oder alternativ an dem Getriebe 5 ist ein Positionssensor 7 angeordnet. Mithilfe des Positionssensors 7 kann eine Stellbewegung bzw. die Position des Stellglieds 6 erfasst werden. Eine Angabe über die erfasste Position des Stellglieds 6 wird an das Steuergerät 3 übermittelt. Beispielsweise kann der Positionssensor 7 einen GMR-Sensor (GMR: Giant Magnetic Resistance), einen Hall-Sensor oder dergleichen aufweisen. Alternativ können auch optische Verfahren angewendet werden. Als Positionsangabe kann beispielsweise eine Detektorspannung an das Steuergerät 3 bereitgestellt werden, die die Positionsangabe z. B. mithilfe eines Analog-Digital-Wandlers vor der Weiterverarbeitung digitalisiert.

Derartige Stellgeber 2 werden beispielsweise in Kraftfahrzeugen eingesetzt, z. B. bei Drosselklappen, Abgasrückführungsventilen, Ladungsbewegungsklappen und zahlreichen ähnlichen Komponenten. Insbesondere finden derartige Stellgeber 2 dort Einsatz, wo die korrekte Stellbewegung des Stellgebers 2 funktionswesentlich ist und daher mithilfe des zusätzlichen Positionssensors 7 überprüft werden muss.

Beim Verstellen des Stellglieds 6 wirkt auf dieses aufgrund von Reibungen sowohl im Getriebe 5 als auch in dem Stellantrieb und dem Stellglied eine der Stellbewegung entgegengesetzte Gegenkraft. Weiterhin kann das Stellglied 6 je nach Einsatzgebiet mit einer Rückstellkraft beaufschlagt sein, die beispielsweise über eine Rückstellfeder 8, insbesondere eine vorgespannte Rückstellfeder 8, auf das Stellglied 6 einwirkt, so dass das Stellglied 6 im stromlosen Zustand des Stellantriebs 4 in eine Ruheposition gebracht wird.

Zum Betreiben des elektronisch kommutierten Elektromotors des Antriebs 4 ist eine Kenntnis der Rotorlage eines in dem Elektromotor vorgesehenen Rotors erforderlich. Das Ansteuern erfolgt in der Regel durch Ansteuersignale bzw. Kommutierungssignale, die eine Statormagnetisierung hervorrufen, die zur Erzeugung eines Antriebsmoments führt. Je nach Rotorlage wechseln die Ansteuersignale, um die Erzeugung des Antriebsmoments aufrechtzuerhalten. Das Motormagnetfeld wechselwirkt mit dem Erregermagnetfeld, das von dem Läufer 41 generiert wird, und führt so zur Erzeugung eines Antriebsmoments. Bezüglich eines bestimmten Motorstroms durch die Statorwicklungen ist das erzeugte Drehmoment abhängig von dem Winkel zwischen der Richtung des Motormagnetfelds und der Richtung des Erregermagnetfelds. Bezüglich eines bestimmten Motorstroms wird das Maximum des Drehmoments bei einem Voreilungswinkel des Motormagnetfelds zum Statormagnetfeld von 90° erreicht. Bei Abweichungen von diesem Voreilungswinkel nimmt das Drehmoment bezüglich des bestimmten Motorstroms ab. In Figur 2 ist ein Verlauf des Drehmoments bei einem bestimmten Motorstrom über dem Voreilungswinkel aufgetragen.

Es ist nun vorgesehen, auf das Vorsehen eines Rotorlagesensors oder eines Verfahrens zur sensorlosen Erfassung der Rotorlage zu verzichten und stattdessen den Positionssensor 7, der fest mit dem Stellglied 6 gekoppelt ist, zu verwenden, um die aktuelle Rotorlage zu ermitteln.

Wird der Positionssensor 7 zum Überprüfen der tatsächlichen Position des Stellglieds 2 gefordert, so kann der bürstenlose Elektromotor des Antriebs 4 ohne den Rotorlagesensor vorgesehen werden, da stattdessen die Position des Positionssensors 7 verwendet werden kann, um die Rotorlage aus der Position des Stellglieds 6 abzuleiten. Die Zuordnung der Position des Stellglieds 6 zu der Rotorlage des Rotors des Elektromotors erfolgt unter Berücksichtigung des Unter- bzw.

Übersetzungsverhältnisses des Getriebes 5 bzw. der Mechanik. Die Zuordnung erfolgt in dem Steuergerät 3 mithilfe einer vorgegebenen Zuordnungsfunktion oder einer Lookup-Tabelle.

In einem Beispiel kann der Elektromotor des Antriebs 4 als dreiphasiger Synchronmotor mit zwei Rotorpolpaaren vorgesehen sein. Die minimale Auflösung der Kommutierung beträgt dann 30° mechanischer Rotorlage. Dies entspricht auch der geforderten Auflösung der Rotorlageerkennung. Bei einem angenommenen Übersetzungsverhältnisses des Getriebes von 1:30 ist dann für eine ausreichende Diskriminierung der Rotorlage eine Auflösung des Positionssensors 7 von 1° notwendig.

Die Stellgeber 2, bei denen die Position des Stellglieds 6 durch einen Positionssensor 7 überprüft werden soll, finden in der Regel Einsatz in sensiblen Bereichen des Kraftfahrzeugs bzw. des Motorsystems. Sie erfordern daher eine relativ hohe Auflösung der Position des Stellglieds 6. Somit ist es zur Realisierung des Stellgebersystems 1 in der Regel nicht notwendig, den bisherigen Positionssensor 7 durch einen mit höherer Auflösung zu ersetzen. Dies gilt insbesondere für den Einsatz des Stellgebersystems 1 für eine Drosselklappe in einem Verbrennungsmotor.

Das Steuergerät 3 erfasst die Position des Stellglieds 6 über den Positionssensor 7 und ermittelt daraus mithilfe des Übersetzungsverhältnisses des Getriebes 5 die momentane Rotorlage. Das Steuergerät 3 verwendet die Rotorlage zur Ansteuerung des Antriebs 4 durch Anlegen der Ansteuersignale, so dass ein bestimmtes Antriebsmoment bereitgestellt wird. Umfasst der Antrieb 4 einen Synchronmotor, so bestimmt das Steuergerät 3 mithilfe der erfassten Rotorlage, welche der Statorspulen des Synchronmotors bestromt werden soll, um das benötigte Antriebsmoment bereitzustellen.

Das Steuergerät 3 kann zum Verstellen des Stellglieds 6 eine Positionsregelung realisieren, die auf der erfassten Position des Stellglieds 6 als Istgröße basiert. Durch z. B. externe Vorgabe einer Sollposition kann durch die Positionsabweichung des Stellglieds 6 von der Sollposition eine Positionsregelung durchgeführt werden, die als Stellgröße ein Antriebsmoment des Elektromotors vorgibt. Zur Umsetzung der Stellgröße können dann gemäß dem oben beschriebenen Verfahren Ansteuersignale für den Elektromotor generiert werden.

Bei Inbetriebnahme des Stellgebersystems 1 liegt keine Zuordnung zwischen der Positionsangabe des Positionssensors 7 und der Rotorlage des Rotors des Antriebs 4 vor. Es ist daher ein Kalibrierungsverfahren vorgesehen, das es ermöglicht, die Positionsangaben in Rotorlagen umzuwandeln. Bei herkömmlichen Kalibrierungsverfahren für bürstenlose Elektromotoren wird der Verfahrweg des Rotors bzw. des Stellglieds 6 im gesteuerten Betrieb durchlaufen, und die entsprechenden Positionsangabe abgefragt und eine entsprechende Zuordnung zwischen einem Raumzeigerwinkel eines angelegten Motormagnetfelds und der zugehörigen Rotorlage aufgezeichnet. Dies erfolgt unter der Annahme, dass sich das Erregermagnetfeld im gesteuerten Betrieb direkt in Richtung des Motormagnetfelds ausrichtet.

In der Praxis wirken jedoch aufgrund von Reibungskräften, beispielsweise des Getriebes 5 oder des Stellglieds 6 oder aufgrund einer Rückstellkraft, Gegenkräfte, die im gesteuerten Betrieb zu einer Abweichung der Richtung des Motormagnetfelds bezüglich der Richtung des Erregermagnetfelds führen. Auch kann, wie dargestellt, das Stellglied 6 mit der Rückstellfeder 8 beaufschlagt sein, deren Rückstellkraft zu einer erheblichen Abweichung der Ausrichtungen des Erregermagnetfelds und des Motormagnetfelds führen kann.

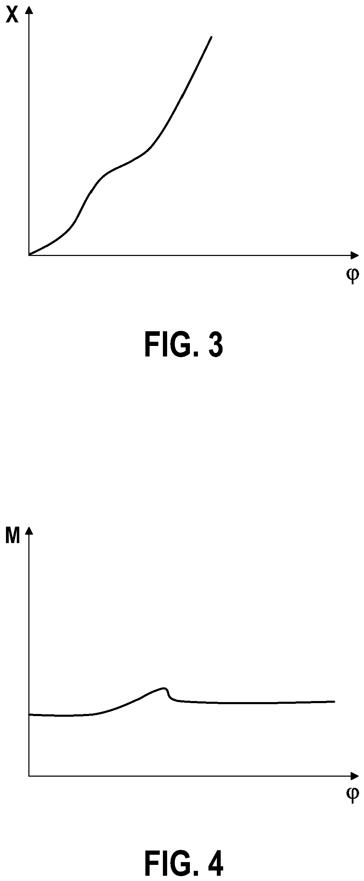

Bei Verwendung eines ungleichmäßig untersetzenden Getriebes 5 kann sich beispielsweise ein Verlauf einer Positionsangabe X über der Läuferlage $\varphi$ ergeben, der nicht linear ist, wie es in Figur 3 dargestellt ist.

Um den Einfluss dieser Gegenkräfte in dem Kalibrierungsverfahren zu berücksichtigen und zu eliminieren, ist nun vorgesehen, für einen bestimmten Raumzeigerwinkel des den Stellantrieb 4 ansteuernden Kommutierungsmusters, das einem bestimmten Verhältnis der Phasenspannungen zueinander entspricht, zwei verschiedene Amplitudenverläufe vorzusehen. Diese führen aufgrund der wirkenden Gegenkraft zu verschiedenen Positionen des Stellglieds 6, die zu Verläufen von verschiedenen Positionsangaben des Positionssensors 7 führen.

Zur Kalibrierung des Stellgebersystems 1, bei dem das Stellglied 6 über ein nicht lineares Getriebe 5 oder eine nichtlineare Mechanik mit dem Antrieb 4 gekoppelt ist, ist es schwierig, den Einfluss von der Stellbewegung entgegenwirkenden Gegenkräften, wie beispielsweise der Reibung oder einer Rückstellkraft aufgrund der Rückstellfeder 8, so zu eliminieren, dass schließlich eine eindeutige Zuordnung zwischen der Positionsangabe des Positionssensors 7 und der Position des Stellglieds 6 bei einem Stellgebersystem 1 ohne Rückstellkräfte bzw. ohne Gegenkräfte ermittelt werden kann. Dazu wird der bürstenlose Elektromotor 4 in zwei Durchgängen mit einer konstanten Ansteuerfrequenz so angesteuert, dass sich ein Raumzeigerwinkel eines von den Statorwicklungen bewirkten Motormagnetfelds mit konstanter Kreisfrequenz bewegt. Die beiden Durchgänge werden mit verschiedenen Amplitudenverläufen durchgeführt, die sich durch verschiedene Proportionalitätsfaktoren $a_1$, $a_2$ unterscheiden. Die Amplitudenverläufe ergeben sich abhängig von dem über dem Weg bekannten Gegenmomentenverlauf $M(\varphi)$ aufgrund von Reibung, Gegenkräften und Rückstellkräften. Ein möglicher Gegenmomentenverlauf $M(\varphi)$ ist in Fig. 4 dargestellt. Es gilt:

$$A_1 = a_1 \times M(\varphi),$$

$$A_2 = a_2 \times M(\varphi),$$

wobei sich die Amplituden $A_1$ und $A_2$ aus dem Produkt des bekannten Gegenmomentenverlaufs $M(\varphi)$ und den voneinander verschiedenen Proportionalitätsfaktoren $a_1$, $a_2$ ergeben.

Alternativ können auch für einen bestimmten Raumzeigerwinkel verschiedene Amplituden $A_1$, $A_2$, die sich aus obigen Formeln ergeben, nacheinander angelegt werden. Die Amplitude kann beispielsweise eine Phasenspannung oder einen Phasenstrom betreffen.

Da die Amplitude der Spannung bzw. des Motorstroms an den Verlauf der Gegenkräfte angepasst ist, können diese positionsabhängig ausgeglichen werden. Die resultierenden Differenzwinkel $\Phi_1$ und $\Phi_2$ zwischen der Richtung des Motormagnetfelds und der Richtung des Erregermagnetfelds ergeben sich dann aus:

$$\sin(\Phi_1) = c / a_1,$$

$$\sin(\Phi_2) = c / a_2,$$

wobei c einem konstanten aber unbekannten multiplikativen Faktor c für den Gegenmomentenverlauf M(φ) entspricht, der Exemplarstreuungen, Thermo- und Alterungseffekte längs des Stellwegs abbildet.

Durch trigonometrische Umformungen lässt sich der Korrekturfaktor c eliminieren und für den Differenzwinkel $\Phi_1$ ergibt sich:

$$\sin(\Phi_1) = \frac{a_2}{a_1} \cdot \frac{h}{\sqrt{h^2 + (\frac{a_2}{a_1} - \sqrt{1 - h^2})^2}}$$

mit

$$h = \sin(\Phi_1 - \Phi_2)$$

Die Winkeldifferenz $\Phi_1 - \Phi_2$ der Differenzwinkel $\Phi_1$, $\Phi_2$, die der Winkeldifferenz zwischen dem Motormagnetfeld und dem von dem Rotor erzeugten Erregermagnetfeld entspricht, lässt sich aus den gemessenen Sensorwerten $X_1(t)$, $X_2(t)$ und einem, beispielsweise durch ein Korrelationsverfahren ermittelten, $\Delta t$ mit $X_1(t) = X_2(t+\Delta t)$ wie folgt bestimmen:

$$\Phi_1 - \Phi_2 = \omega \, \Delta t,$$

wobei $\omega$ die Kreisfrequenz der auf die Statorwicklungen beaufschlagten sinusförmigen Phasenspannungen bzw. Motorströme ist, d. h. die Kreisfrequenz des umlaufenden Raumzeigers. Mit der bekannten Beziehung

$$\varphi(t) = \omega t + \varphi_0,$$

wobei $\varphi_0$ der Phasenlage zum Zeitpunkt t = 0 entspricht und der ermittelten Winkeldifferenz $\Phi_1 - \Phi_2$ ergibt sich die Rotorlage $\varphi^*(t)$ für ein Stellgebersystem 1, bei dem keine Gegenkräfte auf das Stellglied 6 bzw. den Läufer des Stellantriebs 4 wirken, zu

$$\varphi^*(t) = \varphi(t) - \Phi_1 = \omega t + \varphi_0 - \Phi_1$$

Ersetzt man t durch die inverse Funktion von $X_1(t)$, so erhält man schließlich die gesuchte Beziehung zwischen der tatsächlichen Rotorlage $\varphi^*$ und der Positionsangabe X.

**Patentansprüche**

1. Verfahren zum Kalibrieren eines Stellgebersystems (1) mit einem Stellgeber (2), wobei der Stellgeber (2) umfasst:

-- einen Antrieb (4) mit einem elektronisch kommutierten Elektromotor,
-- ein bewegbares Stellglied (6),
-- eine Mechanik (5), die den Antrieb (4) mit dem Stellglied (6) koppelt, so dass bei Ansteuern des Antriebs (4) eine Verstellung des Stellglieds (6) bewirkt wird;
-- einen Positionssensor (7) zum Erfassen einer Position des Stellglieds (6) an dem Stellglied (6) oder in der Mechanik (5) und zum Bereitstellen einer entsprechenden Positionsangabe zur Kommutierung des Elektromotors des Antriebs (4),

wobei das Verfahren folgende Schritte aufweist:

- Ansteuern des Antriebs (4) mit einem ersten Amplitudenverlauf $A_1 = a_1 * M(\phi)$, wobei M($\phi$) der über dem Weg bekannte Gegenmomentverlauf ist, wobei $a_1$ ein erster Proportionalitätsfaktor ist, so dass ein mit einer vorgegebenen Kreisfrequenz ($\omega$) umlaufendes erstes Motormagnetfeld generiert wird, und Ermitteln eines resultierenden zeitlichen Verlaufs von ersten Positionsangaben;

- Ansteuern des Antriebs (4) mit einem von dem ersten Amplitudenverlauf ($A_1$) verschiedenen zweiten Amplitudenverlauf $A_2 = a_2 * M(\phi)$, wobei $a_2$ ein zweiter Proportionalitätsfaktor ist, so dass ein mit der vorgegebenen Kreisfrequenz umlaufendes zweites Motormagnetfeld generiert wird, und Ermitteln eines resultierenden zeitlichen Verlaufs von zweiten Positionsangaben, wobei das erste und das zweite Motormagnetfeld abhängig von einer läuferlageabhängigen, auf das Stellglied (6) wirkenden Gegenkraft variabel bestimmt sind;

- Ermitteln einer Winkeldifferenz als Differenz der Differenzwinkel ($\Phi_1$ - $\Phi_2$) zwischen der Richtung des Motormagnetfelds und der Richtung eines von dem Läufer generierten Erregermagnetfelds anhand einer zeitlichen Verschiebung der zeitlichen Verläufe der ersten und zweiten Positionsangaben;

- basierend auf der ermittelten Winkeldifferenz als Differenz der Differenzwinkel ($\Phi_1$ - $\Phi_2$), Ermitteln des Differenzwinkels $\Phi_1$ zwischen der Richtung des Motormagnetfelds und der Richtung eines von dem Läufer generierten Erregermagnetfelds bei einer bestimmten Richtung des ersten Motormagnetfelds gemäß der Gleichung

$$\sin(\Phi_1) = \frac{a_2}{a_1} \cdot \frac{h}{\sqrt{h^2 + (\frac{a_2}{a_1} - \sqrt{1 - h^2})^2}}$$

mit

$$h = \sin(\Phi_1 - \Phi_2);$$

- Zuordnen der bei der bestimmten Richtung des ersten Motormagnetfelds erfassten Positionsangabe zu einer Läuferlage, die der mithilfe des ermittelten Differenzwinkels $\Phi_1$ korrigierten bestimmten Richtung des ersten Motormagnetfelds entspricht.

2. Verfahren nach Anspruch 1, wobei die zeitliche Verschiebung der zeitlichen Verläufe der Positionsangaben durch ein Korrelationsverfahren ermittelt wird.

3. Computerprogrammprodukt, das einen Programmcode enthält, der, wenn er auf einer Datenverarbeitungseinheit ausgeführt wird, das Verfahren nach einem der Ansprüche 1 oder 2 durchführt.

**Claims**

1. Method for calibrating a position encoder system (1) with a position encoder (2), wherein the position encoder (2) comprises:

-- a drive (4) with an electronically commutated electric motor,
-- a movable actuator element (6),
-- a mechanism (5) which couples the drive (4) to the actuator element (6) so that when the drive (4) is actuated, adjustment of the actuator element (6) is brought about;
-- a position sensor (7) for sensing a position of the actuator element (6) at the actuator element (6) or in the mechanism (5) and for making available a corresponding position indication for commutating the electric motor of the drive (4),

wherein the method comprises the following steps:

- actuating the drive (4) with a first amplitude profile $A_1 = a_1 * M(\varphi)$, wherein $M(\varphi)$ is the counter-torque profile known over the distance, wherein $a_1$ is a first proportionality factor so that a first motor magnetic field which rotates with a predefined circular frequency ($\omega$) is generated, and determining a resultant time profile of first position indication;

- actuating the drive (4) with a second amplitude profile $A_2 = a_2 * M(\varphi)$, different from the first amplitude profile ($A_1$), where $a_2$ is a second proportionality factor, so that a second motor magnetic field which rotates with the predefined circular frequency is generated, and determining a resulting time profile of second position indications, wherein the first and second motor magnetic fields are determined in a variable fashion as a function of a rotor-position-dependent opposing force which acts on the actuator element (6);

- determining an angle difference as a difference between the difference angles ($\varphi_1$-$\varphi_2$) between the direction of the motor magnetic field and the direction of an exciter magnetic field which is generated by the rotor, on the basis of a time shift of the time profiles of the first and second position indications;

- on the basis of the determined angle difference as a difference between the difference angles ($\varphi_1$-$\varphi_2$), determining the difference angle $\varphi_1$ between the direction of the motor magnetic field and the direction of an exciter magnetic field generated by the rotor for a specific direction of the first motor magnetic field according to the equation

$$\sin(\Phi_1) = \frac{a_2}{a_1} \cdot \frac{h}{\sqrt{h^2 + (\frac{a_2}{a_1} - \sqrt{1-h^2})^2}}$$

where

$$h = \sin(\varphi_1 - \varphi_2);$$

- assigning the position indication, sensed for the determined direction of the first motor magnetic field, to a rotor position which corresponds to the determined direction of the first motor magnetic field which is corrected using the determined difference angle $\varphi_1$.

2. Method according to Claim 1, wherein the time shift of the time profiles of the position indications is determined by means of a correlation method.

3. Computer program product which contains a program code which when executed on a data processing unit carries out the method according to one of Claims 1 and 2.


**Revendications**

1. Procédé pour étalonner un système transmetteur de réglage (1) comprenant un transmetteur de réglage (2), le transmetteur de réglage (2) comportant :

- un dispositif d'entraînement (4) comprenant un moteur électrique à commutation électronique,
- un organe de réglage (6) mobile,
- un mécanisme (5) qui relie le dispositif d'entraînement (4) à l'organe de réglage (6) de sorte qu'un positionnement de l'organe de réglage (6) se produit lors d'une commande du dispositif d'entraînement (4) ;
- un capteur de position (7) destiné à détecter une position de l'organe de réglage (6) au niveau de l'organe de réglage (6) ou dans le mécanisme (5) et à fournir une indication de position correspondante destinée à la commutation du moteur électrique du dispositif d'entraînement (4),

le procédé comprenant les étapes suivantes :

- commande du dispositif d'entraînement (4) avec une première courbe d'amplitude $A_1 = a_1 * M(\phi)$, $M(\phi)$ étant la courbe du couple résistant connue sur le trajet, $a_1$ étant un premier coefficient de proportionnalité, de sorte qu'un premier champ magnétique de moteur circonférentiel ayant une fréquence angulaire ($\omega$) prédéfinie soit généré, et détermination d'une courbe dans le temps résultante de premières indications de position ;
- commande du dispositif d'entraînement (4) avec une deuxième courbe d'amplitude $A_2 = a_2 * M(\phi)$, différente de la première courbe d'amplitude $A_1$, $a_2$ étant un deuxième coefficient de proportionnalité, de sorte qu'un deuxième champ magnétique de moteur circonférentiel ayant la fréquence angulaire prédéfinie soit généré, et détermination d'une courbe dans le temps résultante de deuxièmes indications de position, le premier et le deuxième champ magnétique de moteur étant déterminés de manière variable en fonction d'une force antagoniste dépendante de la position du rotor agissant sur l'organe de réglage (6) ;

- détermination d'une différence angulaire en tant que différence des angles différentiels ($\Phi_1 - \Phi_2$) entre la direction du champ magnétique de moteur et la direction d'un champ magnétique d'excitateur généré par le rotor à l'aide d'un décalage dans le temps des courbes dans le temps des premières et deuxièmes indications de position ;

- en se basant sur la différence angulaire déterminée en tant que différence des angles différentiels ($\Phi_1 - \Phi_2$), détermination de l'angle différentiel $\Phi_1$ entre la direction du champ magnétique de moteur et la direction d'un champ magnétique d'excitateur généré par le rotor lors d'une direction déterminée du premier champ magnétique de moteur selon l'équation

$$\sin(\Phi_1) = \frac{a_2}{a_1} \cdot \frac{h}{\sqrt{h^2 + (\frac{a_2}{a_1} - \sqrt{1 - h^2})^2}}$$

avec

$$h = \sin(\Phi_1 - \Phi_2) \; ;$$

- affectation de l'indication de position détectée lors de la direction déterminée du premier champ magnétique de moteur à une position de rotor qui correspond à la direction déterminée du premier champ magnétique de moteur corrigée à l'aide de l'angle différentiel $\Phi_1$ déterminé.

**2.** Procédé selon la revendication 1, le décalage dans le temps des courbes dans le temps des indications de position étant déterminé par un procédé de corrélation.

**3.** Produit de programme informatique qui contient un code de programme qui, lorsqu'il est exécuté sur une unité de traitement de données, met en œuvre le procédé selon l'une des revendications 1 et 2.

# FIG. 1

FIG. 2

Drehmoment [ % ]

-180    -90    0    90    180

Winkel [ ° ]

**FIG. 3**

**FIG. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1338775 A2
- DE 19829808 A1
- DE 10065488 A1